# EUROPÄISCHE PATENTSCHRIFT

(11) **EP 2 951 451 B1**
(45) Veröffentlichungstag und Bekanntmachung des Hinweises auf die Patenterteilung: **26.04.2017**
(21) Anmeldenummer: 14711906.9
(22) Anmeldetag: 27.01.2014
(51) Int. Cl.: F16C 17/26, F16C 33/66

(54) **GLEITLAGERPAKET**
SLIDE BEARING SET
ENSEMBLE DE PALIERS LISSES

(30) Priorität: 30.01.2013 AT 500642013
(43) Veröffentlichungstag der Anmeldung: 09.12.2015
(73) Patentinhaber: Miba Gleitlager Austria GmbH, 4663 Laakirchen (AT)
(72) Erfinder: HAGER, Gunther, A-4563 Ottsdorf am Ziehberg (AT); HÖLZL, Johannes Sebastian, A-4880 Berg im Attergau (AT); KARI, Alexander, A-5330 Fuschl am See (AT)
(74) Vertreter: Burger, Hannes
(86) Internationale Anmeldenummer: PCT/AT2014/050028
(87) Internationale Veröffentlichungsnummer: WO 2014/117195

(56) Entgegenhaltungen:
- EP-A1- 2 063 139
- DE-A1- 1 425 132
- DE-A1- 3 817 312
- DE-U1-202010 000 914
- US-A- 4 083 612
- US-A1- 2011 140 448

## Beschreibung

Die Erfindung betrifft ein Gleitlagerpaket umfassend eine Gleitlager-Kombination aus einem Radiallager mit einer Radiallagergleitfläche und einem ersten Axiallager mit einer Axiallagergleitfläche und einem zweiten Axialgleitlager, wobei das erste Axiallager und das zweite Axialgleitlager in einer Axialrichtung neben dem Radiallager so angeordnet sind, dass sie durch das Radialgleitlager getrennt sind, sowie mit einer Schmiermittelversorgungseinrichtung, die eine Zufuhrleitung für ein Schmiermittel zur Radiallagergleitfläche des Radiallagers umfasst, wobei in dem Radiallager zumindest eine erste Quernut und zumindest eine zweite Quernut ausgebildet sind, sodass zumindest ein Teil des Schmiermittels in Richtung auf das erste Axiallager und das zweite Axiallager umgelenkt wird und das erste Axiallager und das zweite Axialgleitlager ausschließlich über das Radiallager mit dem Schmiermittel versorgbar sind. Weiter betrifft die Erfindung ein Windkraftanlagengetriebe mit zumindest einem Zahnrad, das auf einer Achse über ein Gleitlagerpaket gelagert ist.

Derartige Gleitlagerpakete sind aus der US 2011/140448 A1, der DE 38 17 312 A1 und der US 4,083,612 A bekannt.

Bekannte Gleitlageranwendungen aus dem Maschinen- und Motorenbau erfordern meist Lagerlösungen welche entweder für hohe Axial- oder hohe Radialkräfte ausgelegt sind, während die Belastungen in der "Nebenrichtung" eine untergeordnete Rolle spielen. In Hauptgetrieben für Windturbinen treten aufgrund von Schrägverzahnungen sowie aufgrund von großen elastischen Verformungen Kräfte sowohl in axialer und wie auch in radialer Richtung in derselben Größenordnung auf. Die Forderung nach einer möglichst kompakten und einfachen Bauweise in einem Windgetriebe lässt eine räumliche Trennung der Lagerstellen nicht zu und erschwert dadurch die Trennung der Hydrauliksysteme.

Bei einer Festlageranordnung mit Gleitlagern, wie z.B. in einer Planetenradlagerung oder in Stirnradstufen, bestehend aus zwei axialen Anlaufscheiben, sowie einem Radiallager muss eine geeignete Ölversorgung aller Kontaktpartner sichergestellt werden. Aufgrund des Funktionsprinzips hydrodynamischer Gleitlager, der Schleppströmung, ergibt sich für jede Lagerstelle ein erforderlicher Ölvolumenstrom. An den Ölein- und Ölaustrittsquerschnitten stellen sich entsprechende Druckniveaus ein. Bei einer gemeinsamen Ölversorgung der drei Lagerstellen, jedoch der Aufteilung in drei separate Ölströme vor den Lagereintritten kann der Fall eintreten, dass die Ölvolumenströme nicht in der erforderlichen Art und Weise aufgeteilt werden und im Extremfall ein Austrocknen zwischen den Kontaktflächen stattfindet. Damit ist die Funktion der hydrodynamischen Gleitlagerungen nicht mehr sichergestellt.

In der EP 2 284 420 B1 sind verschiedene Getriebearten bzw. Getriebeausbildungen in der Verwendung in Windkraftanlagen beschrieben. In den Absätzen [0002] bis [0013] dieser Druckschrift werden zudem auch die Anforderungen an und die damit verbunden Probleme der einzelnen Lagerungen für die Getriebewellen bzw. Achsen beschrieben. Es sei daher an dieser Stelle zur Vermeidung von Wiederholungen dazu auf diese Druckschrift verwiesen.

Aus der EP 2 383 480 A1 ist Planetengetriebe für eine Windkraftanlage bekannt, umfassen zumindest ein Sonnenrad, ein Hohlrad und einen Planetenträger, in dem mehrere Planetenräder gelagert sind, mehrere Radialgleitlagern zur Lagerung der Planetenräder, die jeweils eine Hülse aus einem Gleitlagerwerkstoff umfassen, die entweder als Innenring auf einer Planetenradachse befestigt oder als Außenring in einer Bohrung eines Planetenrades montiert ist, wobei ein zugehöriger Lageraußen- oder Lagerinnenring entweder durch die Bohrung des Planetenrades oder durch die Planetenradachse gebildet ist, mehrere Axialgleitlagern zur Lagerung der Planetenräder, die jeweils ein erstes Lagerelement aus einem Gleitlagerwerkstoff umfassen, der an einer Kontaktfläche zwischen einer Planetenträgerwange und einer Stirnseite eines Planetenrades entweder auf die Planetenträgerwange oder auf die Stirnseite des Planetenrades aufgebracht ist, wobei ein zugehöriges zweites Lagerelement entweder durch die Stirnseite des Planeten oder durch die Planetenträgerwange gebildet ist.

Zur Schmierung der Gleitlager werden in dieser Druckschrift drei verschiedene Möglichkeiten beschrieben.
1. Druckschmierung für den belasteten Betrieb des Getriebes. Die Gleitlager werden über Drucköl von der Planetenradachse versorgt. Dabei erfolgt die Druckölzufuhr ca. 90° vor dem Maximum der Belastungszone des Lagers.
2. Tauchschmierung für den belastungsfreien Betrieb des Getriebes. Die Gleitlager werden über ein Ölreservoir in der Planetenradachse mit Öl versorgt. Das Ölreservoir wird durch das Eintauchen der Planetenradachse in den Ölsumpf mit Öl gefüllt und leitet dieses Öl an das Gleitlager weiter. Die Ölzufuhr erfolgt ca. 110° vor dem Maximum der Belastungszone des Lagers. Durch die hydraulische Verbindung der Druckschmierung und der Tauchschmierung wird ein Ablauf des Öls sichergestellt.
3. Ölspeicherung für den belastungsfreien Betrieb des Getriebes. Die Radialgleitlager sind mit Ölstaukanten an den Stirnseiten der Planetenräder ausgerüstet, so dass immer ein definierter Ölstand im Radialgleitlager verbleibt. Damit ist eine Schmierung der Radialgleitlager im belastungsfreien Zustand gewährleistet.

Zur Druckschmierung der Axial- und/oder Radialgleitlager kann ein Ölverteilerring vorgesehen sein, der eine Sonnenradachse radial umgibt und eine Verbindung zu einem Ölzuführungskanal in einem Getriebegehäuse aufweist, wobei zumindest ein Ölverteilungskanal im Planetenträger vorgesehen ist, der mit dem Ölverteilerring verbunden ist und an einer Schmierungsstelle für ein Planetenradlager endet. Dabei können in den Planetenradachsen jeweils zwei von einem zur Planetenradachse parallelen Ölverteilungskanalabschnitt ausgehende, sich radial erstreckende Bohrungen vorgesehen sein, und die Hülsen jeweils zwei Schmierstoffsammelvorrichtungen aufweisen, zwischen denen jeweils eine umlaufende Schmierstoffversorgungsnut ausgebildet ist.

Zur Tauchschmierung der Axial- und/oder Radialgleitlager kann jeweils eine Bohrung in den Planetenradachsen vorgesehen sein, die ein durch Eintauchen der jeweiligen Planetenradachse in einen Ölsumpf füllbares Ölreservoir bildet. Dabei kann in den Planetenradachsen jeweils eine vom Ölreservoir ausgehende, sich radial erstreckende Bohrung vorgesehen sein, die an der Hülse endet. Die Hülsen können zudem jeweils in einem Bereich, in dem die vom Ölreservoir ausgehende Bohrung endet, eine Schmierstoffsammelvorrichtung aufweisen, die durch eine Aussparung an der Hülse gebildet ist.

Die DE 199 60 157 A1 beschreibt die Schmiermittelzufuhr eines Planetentriebes für das Zuführen mittels Fliehkraft bewegten Schmiermittels zu Lagerungen von Planetenrädern eines ersten Planetensatzes auf ersten mit einem Ende an einer Wandung eines Planetenträgers aufgenommenen ersten Planetenbolzen und für das Zuführen des Schmiermittels zu Lagerungen von Planetenrädern eines zumindest in Längsrichtung durch die Wandung des Planetenträgers vom ersten Planetensatz getrennten zweiten Planetensatzes, mit einer das Schmiermittel zu den ersten Planetenbolzen leitenden ersten Leiteinrichtung, mit jeweils mindestens einem durch die Wandung führenden Kanal in den ersten Planetenbolzen, mit jeweils mindestens einem von dem Kanal ausgehenden und das Schmiermittel zur Lagerung der Planetenräder des ersten Planetensatzes führenden Querkanal und mit einer das auf Seiten des zweiten Planetensatzes angeordneten zweiten Leiteinrichtung.

Die DE 10 2010 000 809 A1 beschreibt eine kompakte Radial-Axial-Lagerung mit einem Radialkräfte aufnehmenden Radialzylinderrollenlager mit einem Außenring und einem Innenring und einem Axialkräfte aufnehmenden Axialzylinderrollenlager mit einer als Wellenscheibe ausgebildeten ersten Laufscheibe und einer als Gehäusescheibe ausgebildeten zweiten Laufscheibe, wobei der Außenring einen Einstich aufweist und in diesem Einstich die erste Laufscheibe und ein erster Zylinderrollenkranz derart angeordnet sind, dass eine erste Seite der ersten Laufscheibe in axialer Richtung an dem Innenring des Radialzylinderrollenlagers abgestützt ist, eine zweite Seite dieser Laufscheibe eine erste Laufbahn für den ersten Zylinderrollenkranz bildet und unmittelbar an dieser zweiten Seite eine Distanzscheibe anliegend angeordnet ist, wobei weiter konzentrisch zur Distanzscheibe die zweite Laufscheibe angeordnet ist und mit einer ersten Seite eine zweite Laufbahn für den ersten Zylinderrollenkranz bildet und mit einer zweiten Seite eine dritte Laufbahn für einen zweiten Zylinderrollenkranz bildet, zur zweiten Laufscheibe benachbart eine als Wellenscheibe ausgebildete dritte Laufscheibe angeordnet ist, eine erste Seite dieser Laufscheibe eine vierte Laufbahn für den zweiten Zylinderrollenkranz bildet und unmittelbar an dieser ersten Seite die Distanzscheibe anliegend angeordnet ist, und wobei an der zweiten Seite der dritten Laufscheibe ein Spannmittel anliegt, mittels dessen eine Kraft in axialer Richtung einer Welle aufbringbar ist.

Zur Schmierstoffzuführung weist das Radialzylinderrollenlager Kanäle auf, welche mit dem Axialzylinderrollenlager verbunden sein können. Alternativ oder in Kombination kann die Schmierstoffversorgung auch über die Freiräume im Bereich des Einstichs sowie den Spalt zwischen der Distanzscheibe und der zweiten Laufscheibe realisiert werden.

Die DE 195 46 974 A1 beschreibt ein Radialgleitlager für elektrische Maschinen enthaltend ein Lagergehäuse, mindestens einen Festschmierring, welcher auf
einer Welle koaxial befestigt ist, und mindestens eine innerhalb des Lagergehäuses angeordnete Lagerschale, in welcher die Welle drehbar gelagert ist, wobei das Lagergehäuse eine radiale Teilungsebene aufweist und die Lagerschale eine Dünnwandlagerschale ist. Der Festschmierring steht mit einem Ölabstreifer in Kontakt, durch welchen vom Festschmierring aus einem Ölsumpf gefördertes Öl in einen Ölkanal abstreifbar ist, welcher den Ölabstreifer und eine Lauffläche der Dünnwandlagerschale strömungsmäßig derart miteinander verbindet, dass vom Ölabstreifer abgestreiftes Öl die Lauffläche der Dünnwandlagerschale schmiert.

Aus der DE 43 36 915 A1 ist eine Gleitlager-Kombination von Radialgleitlager und Axialgleitlager bekannt, bei der mindestens ein ringförmig angeordnetes Axialgleitlagerelement von mindestens einem Axialgleitlager, welches je mit mindestens einer Axialgleitlagerfläche versehen ist, an einer Radialgleitlagerschale stirnseitig angeordnet und an der Radialgleitlagerschale befestigt ist. Die Radialgleitlagerschale weist mindestens eine Schmiertasche zur Ölzufuhr zur Radialgleitlagerfläche auf. Die Axialgleitlagerfläche umfasst eine Vielzahl von keilförmigen oder taschenförmigen Ölauflauf-Flächenabschnitten zur Bildung eines Schmierölfilmes oder Schmierölkissens zwischen dieser Axialgleitlagerfläche und einer Gleitlager-Gegenfläche durch Rotation dieser beiden Flächen relativ zueinander.

Die Aufgabe der Erfindung besteht in der Schaffung einer kompakten Gleitlagerung für eine Windkraftanlage bzw. ein Windkraftanlagengetriebe mit einer einfachen Schmiermittelversorgung der Lagerflächen der Gleitlagerung.

Diese Aufgabe der Erfindung wird bei dem eingangs genannten Gleitlagerpaket dadurch gelöst, dass die zumindest einer erste Quernut asymmetrisch zur zumindest einen zweiten Quernut ausgebildet ist.

Weiter wird die Aufgabe der Erfindung durch das eingangs genannte Windkraftanlagengetriebe gelöst, bei dem das Gleitlagerpaket erfindungsgemäß ausgebildet ist.

Die Erfindung nützt die an sich nachteiligen, verschiedenen hydrodynamischen Prinzipien zu ihrem Vorteil aus, indem der gesamte benötigte Volumenstrom des Radial- und des Axiallagers zentral über jenes Gleitlager mit dem höheren Druckniveau, d.h. das Radiallager, angespeist wird und daraus das Gleitlager mit dem geringeren Druckniveau versorgt wird. Der wesentlich geringere Schmiermittelbedarf des Radiallagers wird über die Quernut kompensiert. Damit kann ohne Druck- oder Volumenstromregelung über die Querströmung des Radiallagers und der Quernut das Axiallager mit dem notwendigen Volumenstrom versorgt werden. Von Vorteil ist dabei, dass durch eine einzige Einleitungsstelle für das Schmiermittel in den Bereich der Lagerfläche des Radialgleitlagers auch die Lagerfläche des Axiallagers mit dem Schmiermittel versorgt werden kann, sodass keine aufwändige Konstruktion mit einer zusätzlichen Schmiermittelversorgung für die Axialgleitlagerfläche erforderlich ist. Dabei ist der Volumenstrom zu den Axialgleitlagerflächen über den Querschnitt der zumindest einen Quernut einfach einstellbar. Darüber hinaus ist es möglich Verlustleistungen zu reduzieren, da aufgrund des geringen Querflusses des Radialgleitlagers die hydrodynamische Verlustleistung insbesondere einer schnell laufenden Antriebsstufe eines Windkraftanalgengetriebes nur unzureichend abgeführt werden kann. Zusätzlich wird mit dieser Schmiermittelversorgung der Gleitlagerung auch eine verbesserte Kühlung des Radialgleitlagers aufgrund des gesteigerten Durchflusses an Schmiermittel erreicht.

Die zumindest einer erste Quernut ist asymmetrisch zur zumindest einen zweiten Quernut ausgebildet. Durch diese konstruktive Ausgestaltung der Quernuten kann den Lagerbelastungen ohne großen Aufwand Rechnung getragen werden, indem die Volumenströme an Schmiermittel den jeweiligen Bedürfnissen der einzelnen Gleitlager angepasst werden können.

Insbesondere ist dabei vorgesehen, dass die zumindest eine erste Quernut einen kleineren Strömungsquerschnitt aufweist als die zumindest eine zweite Quernut. Es ist auf diese Weise möglich über die Strömungsquerschnitte unterschiedliche Druckniveaus aufzubauen und unterschiedliche Volumenströme zu realisieren, wodurch der Gefahr des bereichsweisen Trockenlaufens von Gleitflächen besser vermieden werden kann. Durch einen entsprechend kleineren Austrittsquerschnitt in Richtung des unbelasteten Axiallagers wird erreicht, dass der Ölvolumenstrom und damit die Verluste beim unbelasteten Lager minimal sind.

Andererseits ist es alternativ oder zusätzlich dazu auch möglich, dass die zumindest eine erste Quernut in Umfangsrichtung des Radialgleitlagers um einen vordefinierbaren Winkelwert versetzt zur zumindest einen zweiten Quernut ausgebildet ist. Durch diese Ausführungsvariante kann erreicht werden, dass insbesondere in der Anlaufphase auch eine zeitliche Abfolge der vollen Schmiermittelversorgung ermöglicht wird, sodass höher belastete Lagerflächen bevorzugt mit dem Schmiermittel versorgt werden.

Nach einer anderen Ausführungsvariante kann vorgesehen sein, dass das erste Axiallager einen ersten Schmiermittelspalt und das zweite Axiallager einen zweiten Schmiermittelspalt ausbilden, wobei der erste Schmiermittelspalt einen kleineren Strömungsquerschnitt aufweist als der zweite Schmiermittelspalt. Es sind auf diese Weise die Schmiermittel-Querströmungen in die beiden Richtungen auf die Axialgleitlager besser regulierbar.

Um die Kompaktheit des Gleitlagerpaketes zu erreichen und damit auch die Schmiermittelversorgung der einzelnen Gleitflächen besser gestalten zu können ist bevorzugt vorgesehen, dass das erste und das zweite Axialgleitlager unmittelbar benachbart zum Radialgleitlager angeordnet sind.

Es kann weiter vorgesehen sein, dass das Radialgleitlager aufgeteilt ist auf zwei in Axialrichtung nebeneinander angeordnete Teilradialgleitlager. Es kann damit die Schmiermittelversorgung des Radialgleitlagers verbessert werden, da durch die Aufteilung auf zwei Teilradialgleitlager die Gleitflächen eines einzelnen Teilradialgleitlagers kleiner ist und somit die Verteilung des Schmiermittels schneller auf die gesamte Lagerfläche erfolgen kann. Zudem ist es damit auch möglich, sehr breite Lagerstellen erfindungsgemäß auszugestalten, da nur jeweils ein Axialgleitlager über jeweils ein Teilradialgleitlager mit dem Schmiermittel versorgt werden muss.

Dabei kann vorgesehen sein, dass die Zufuhrleitung für das Schmiermittel zwischen den beiden Teilradialgleitlagern angeordnet ist, wodurch der konstruktive Aufwand für die Schmiermittelzuführung auch bei sehr breiten Lagerstellen reduziert werden kann.

Zum besseren Verständnis der Erfindung wird diese anhand der nachfolgenden Figuren näher erläutert.

Es zeigen jeweils in schematisch vereinfachter Darstellung:
- Fig. 1: einen Ausschnitt aus einem Windkraftanlagengetriebe im Bereich einer Gleitlagerung in Seitenansicht geschnitten;
- Fig. 2: ein Radialgleitlager in Ansicht auf die Gleitfläche;
- Fig. 3: eine Ausführungsvariante eines Radialgleitlagers in Ansicht auf die Gleitfläche;
- Fig. 4: einen Ausschnitt einer Ausführungsvariante eines Windkraftanlagengetriebes im Bereich einer Gleitlagerung in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

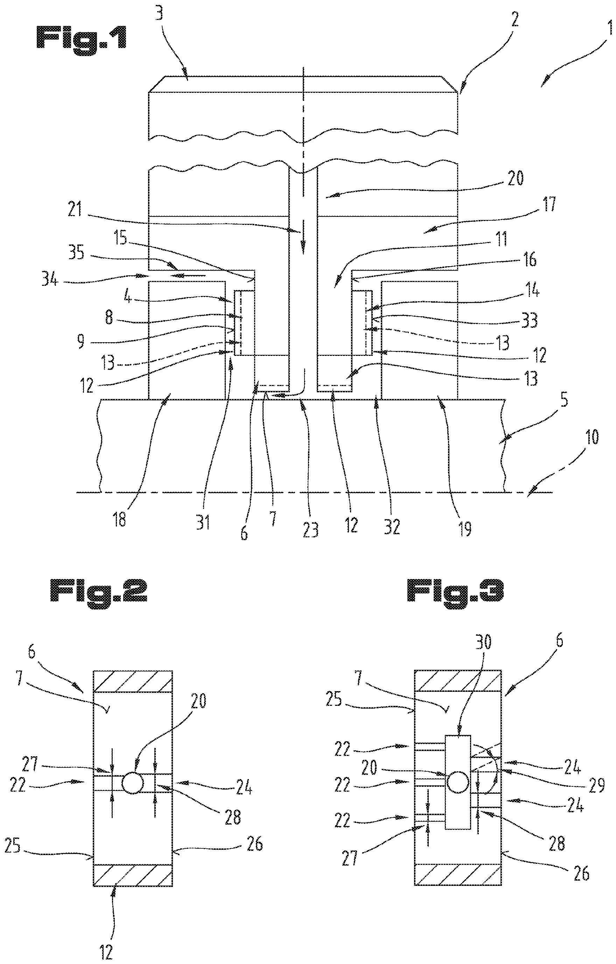

Fig. 1 zeigt einen Querschnitt durch einen Ausschnitt aus einem Windkraftanlagengetriebe 1. Das Windkraftanlagengetriebe 1 ist in Form eines (einfachen) Planetengetriebes ausgebildet.

Bekanntlich umfassen Windkraftanlagen einen Turm an dessen oberen Ende eine Gondel angeordnet ist, in der der Rotor mit den Rotorblättern gelagert ist. Dieser Rotor ist über ein Getriebe mit einem Generator, der sich ebenfalls in der Gondel befindet, wirkungsverbunden, wobei über das Getriebe die niedrige Drehzahl des Rotors in eine höhere Drehzahl des Generatorrotors übersetzt wird. Da derartige Ausführungen von Windkraftanlagen zum Stand der Technik gehören, sei an dieser Stelle an die einschlägige Literatur hierzu verwiesen.

Das Windkraftanlagengetriebe 1 weist zumindest ein Zahnrad 2 auf. Dieses Zahnrad 2 ist in dem Windkraftanlagengetriebe 1 in kämmenden Eingriff zwischen einem zweiten und einem dritten Zahnrad (beide nicht dargestellt) angeordnet. Dazu weist das zumindest eine Zahnrad 2 eine Außenstirnverzahnung 3 auf.

In der Ausführungsform des Windkraftanlagengetriebes 1 als Planetengetriebe, insbesondere als Hauptgetriebe einer Windraftanlage, ist das zweite Zahnrad als Sonnenrad mit einer Stirnverzahnung ausgeführt, das mit einer Welle, die zum Generatorrotor führt, drehfest verbunden ist. Das Sonnenrad ist üblicherweise von mehreren Zahnrädern 2, den Planetenrädern, beispielsweise zwei, vorzugsweise drei oder vier, umgeben.

Das dritte Zahnrad ist als Hohlrad ausgeführt, das das zumindest eine Zahnrad 2 bzw. die Zahnräder 2 in radialer Richtung umgibt und das an einer inneren Oberfläche ebenfalls zumindest teilweise eine Verzahnung aufweist, die in kämmenden Eingriff mit der Außenstirnverzahnung 3 des Zahnrades 2 bzw. der Zahnräder 2 steht. Das Hohlrad ist drehfest mit einer Rotorwelle des Rotors der Windkraftanlage oder drehfest mit dem Gehäuse des Windkraftanlagengetriebes 1 verbunden.

Die Verzahnungen der Zahnräder in dem Windkraftanlagengetriebe 1 können als Geradverzahnung oder Schrägverzahnung ausgeführt sein.

Das zumindest eine Zahnrad 2 (es wird im folgenden nur mehr ein Zahnrad 2 beschrieben, wobei diese Ausführungen auch auf alle bzw. mehrere Zahnräder 2 übertragbar sind) ist über ein Gleitlagerpaket 4 auf einer Achse 5, also beispielsweise einem Planetenbolzen (der so genannten Planetenachse) gelagert. Diese Achse 5 kann entweder einstückig mit zumindest einem Teil eines Zahnradträgers, insbesondere einem Planetenträger, ausgebildet sein oder sie ist als gesonderter Bauteil in Bohrungen des Zahnradträgers eingesetzt.

Es sei darauf hingewiesen, dass nicht nur einstufige Ausführungen von derartigen Windkraftanlagengetrieben 1 im Rahmen der Erfindung möglich sind, sondern auch mehrstufige, beispielsweise zwei- oder dreistufige, wozu in zumindest einem Zahnrad 2, insbesondere einem Planeten, weitere Stirnradstufen integriert sein können. Zudem sind auch Parallelgetriebe, wie sie beispielsweise in der eingangs genannten EP 2 284 420 B1 beschrieben sind, im Rahmen der Erfindung darstellbar. Es sei daher dazu auf diese Druckschrift verwiesen, die in diesem Umfang zu gegenständlicher Beschreibung gehört. Demgemäß kann das Windkraftanlagengetriebe 1 ein einfaches Planetengetriebe und ein paralleles zwei- oder mehrstufiges Planetengetriebe oder generell mehrere Planetengetriebe aufweisen.

Des Weiteren sei angemerkt, dass die Erfindung nicht nur in Planetengetrieben von Windkraftanlagen Anwendung findet, sondern generell in Getrieben für Windkraftanlagen für Getriebewellen, insbesondere zur Übersetzung der langsamen Drehzahl des Rotors einer Windkraftanlage in eine höhere Drehzahl, bzw. bei der Lagerung von Wellen in Windkraftanlagen verwendet werden kann, beispielsweise der Rotorwelle oder der Welle, die das Hohlrad eines Planetengetriebes trägt.

Zudem wird darauf hingewiesen, dass in dieser Beschreibung die Begriffe "Achse" und "Welle" synonym verwendet werden.

Das Gleitlagerpaket 4 umfasst zumindest ein Radiallager 6 (im Folgenden synonym für Radialgleitlager verwendet) mit einer Radiallagergleitfläche 7 und ein erstes Axiallager (im Folgenden synonym für Axialgleitlager verwendet) 8 mit einer Axiallagergleitfläche 9.

Das erste Axiallager 8 ist in einer Axialrichtung 10 neben dem Radiallager 6 angeordnet, wobei es bei dem Ausführungsbeispiel nach Fig. 1 unmittelbar angrenzend an das Radiallager 6 angeordnet ist. Dazu umfasst das Gleitlagerpaket 4 ein Trägerelement 11 an dem an der radial inneren Seite das Radiallager 6 und an einer der axialen Stirnfläche das Axiallager angeordnet ist.

Es besteht jedoch auch die Möglichkeit, dass, wie dies im Folgenden auch noch weiter ausgeführt wird, zumindest das Radiallager 6 als Mehrschichtgleitlager ausgebildet ist. In diesem Fall kann das Trägerelement 11 die Trägerschicht bzw. den Lagerrücken des Radialgleitlagers 6 bilden.

Strichliert ist in Fig. 1 aber auch angedeutet, dass im Falle eines Mehrschichtgleitlagers das Radiallager 6 zusätzlich neben einer Gleitschicht 12 auch eine gesonderte Stützschicht 13 aufweisen kann. In diesem Fall ist das Radiallager 6 über diese Stützschicht 13 am Trägerelement 11 angeordnet.

Es sei jedoch angemerkt, dass generell am Lagerrücken des Radiallagers 6 und/oder des Axiallagers 8 eine Antifrettingschicht angeordnet sein kann, wie dies aus der Gleitlagertechnik bekannt ist.

Bei der Ausführungsvariante der Gleitlagerpaketes 4 nach Fig. 1 weist dieses neben dem ersten Axiallager 8 ein zweites Axiallager 14 auf. Dieses zweite Axiallager 14 ist in der Axialrichtung 10 ebenfalls neben dem Radiallager 6 angeordnet, insbesondere unmittelbar neben dem Radiallager 6, wobei bevorzugt das zweite Axiallager 14 an dem Trägerelement 11 oder der Stützschicht 13 des Radiallagers 6 angeordnet ist. Dabei ist das zweite Axiallager 14 durch das Radiallager 6 von dem ersten Axiallager 8 getrennt. Die erste Axiallager 8 kann also an einer ersten axialen Stirnfläche 15 und das zweite Axiallager 14 an einer zweiten axialen Stirnfläche 16 des Trägerelementes 11 bzw. der Stützschicht 13 angeordnet sein.

Das Gleitlagerpaket 4 ist in einem Gehäuse 17 angeordnet und bevorzugt mit diesem verbunden, beispielsweise in Form eines Presssitzes oder mittels einer stoffschlüssigen und/oder formschlüssigen Verbindung.

In der Verwendung des Gleitlagerpaketes 4 für die Lagerung des Zahnrades 2 des Windkraftanlagengetriebes 1 kann auf das Gehäuse verzichtet werden und das Gleitlagerpaket 4 direkt mit dem Zahnradkörper verbunden sein, d.h. in einer Bohrung des Zahnrades 2 angeordnet sein, wobei auch hier wiederum die genannten Verbindungstechniken zur Verbindung des Gleitlagerpaketes 4 mit dem Zahnrad 2 angewandt werden können.

Generell wird dabei bevorzugt, wenn die Verbindung des Gleitlagerpaketes 4 mit dem Zahnrad 2 oder dem Gehäuse 17 nur über die Stützschicht 13 des Radiallagers 6 oder das Trägerelement 11 erfolgt.

Vorzugsweise sind das erste Axiallager 6 und das zweite Axiallager 14 beabstandet zum Gehäuse 17 oder dem Zahnrad 2 angeordnet.

Wenngleich das erste Axiallager 8 und/oder das zweite Axiallager 14 bevorzugt nur die Gleitschicht 12 aufweisen, kann dieses bzw. können diese - wie dies in Fig. 1 strichliert dargestellt ist - auch als Mehrschichtgleitlager ausgebildet sein und neben der Gleitschicht 12 zumindest noch die Stützschicht 13 aufweisen.

Bevorzugt wird das Gleitlagerpaket 4 zur Ausbildung eines (ausschließlich) hydrodynamischen Festlagers eingesetzt. Dazu können an der Achse 5 ein erster Druckbund 18 und ein zweiter Druckbund 19 angeordnet sein. Diese können entweder an der Achse 5 befestigt sein oder einstückig mit dieser ausgebildet sein. Gegebenenfalls können die Druckbünde 18, 19 aber auch an dem Gehäuse 17 befestigt oder einstückig mit diesem ausgebildet sein.

Das Gleitlagerpaket 4 umfasst weiter eine Schmiermittelversorgungseinrichtung, die in Fig. 1 mit Ausnahme eines Teils einer Zufuhrleitung 20 für das Schmiermittel, insbesondere ein Schmieröl, nicht näher dargestellt ist.

Die Zufuhrleitung 20 ist durch das Gehäuse 17 und gegebenenfalls das Zahnrad 2 geführt und als Bohrung in diesem/diesen ausgeführt. Falls kein Gehäuse 17 verwendet wird, kann der dargestellte Teil der Zufuhrleitung 20 auch lediglich in dem Zahnrad 2 angeordnet sein.

Die Zufuhrleitung 20 mündet in der Radialgleitlagerfläche 7 des Radiallagers 6, sodass über die Zufuhrleitung 20 das Schmiermittel dieser Radialgleitlagerfläche 7 gemäß Pfeil 21 zugeführt wird. Bevorzugt ist die Zufuhrleitung 20 im oberen, weniger belasteten Bereich des Gleitlagerpaketes 4 angeordnet, wie dies in Fig. 1 dargestellt ist.

Das zugeführte Schmiermittel verteilt sich über die Radiallagergleitfläche 7 um zwischen dieser und der Achse 5 einen Schmierfilm auszubilden.

Zusätzlich erfolgt erfindungsgemäß die Schmiermittelversorgung des ersten Axiallagers 8 und insbesondere auch des zweiten Axiallagers 14 ebenfalls über die Zufuhrleitung 20, sodass also keine weiteren Zufuhrleitungen für das Schmiermittel zu diesen Axiallagern 8, 14 ausgebildet sind. Mit anderen Worten werden das erste Axiallager 8 und auch das zweite Axiallager 14 ausschließlich über das Radiallager 6 mit Schmiermittel versorgt.

Dazu ist in der Radiallagergleitfläche 7 zumindest eine erste Quernut 22 ausgebildet, wie dies in Fig. 2 dargestellt ist, die das Radiallager 6 in Draufsicht auf die Radialgleitlagerfläche 7 zeigt. Über diese erste Quernut 22 wird zumindest ein Teil des Schmiermittels gemäß Pfeil 23 (Fig. 1) in Richtung auf das Axiallager umgelenkt.

Zur Versorgung des zweiten Axiallagers 14 ist in der Radiallagergleitfläche 7 zumindest eine zweite Quernut 24 ausgebildet.

Die Quernuten 22, 24 sind im Bereich der Radiallagergleitfläche 7 offen ausgebildet und erstrecken sich von der Mündung der Zuleitung 29 bis in die axialen Stirnflächen 25 bzw. 26 des Radiallagers 6.

Um dem Schmiermittelbedarf der Axiallager 8 bzw. 14 besser gerecht zu werden, sind die zumindest eine erste Quernut 22 und die zumindest eine zweite Quernut 24 asymmetrisch zueinander ausgebildet. Dazu können beispielsweise die erste Quernut 22 einen ersten Strömungsquerschnitt 27 und die zweite Quernut 24 einen zweiten Strömungsquerschnitt 28 aufweisen, wobei der erste Strömungsquerschnitt 27 kleiner ist als der zweite Strömungsquerschnitt 28, wie dies aus den Fig. 2 und 3 ersichtlich ist. Der erste Strömungsquerschnitt 27 kann sich dazu hinsichtlich der Breite und/oder der Tiefe und/oder der Querschnittsform der Quernut 22 vom zweiten Strömungsquerschnitt 28 unterscheiden.

Generell werden die Quernuten 22 und 24 vorzugsweise durch spanende Bearbeitung der Gleitschicht 12 hergestellt.

Die Quernuten 22, 24 können eine Breite in Umfangsrichtung des Radiallagers 6 aufweisen, die einem Winkelwert ausgewählt ist aus einem Bereich von 1° bis 20° entspricht.

Weiter können die Quernuten 22, 24 eine Tiefe in Radialrichtung aufweisen, die ausgewählt ist aus einem Bereich von 1 % bis 100 % der Wandstärke des Axiallagers 8 bzw. 14.

Die Querschnittsform der Quernuten 22, 24 kann rechteckförmig, quadratisch, dreieckig, polygonal, etc. sein, wobei die rechteckförmige oder quadratische oder dreieckige bevorzugt wird.

Weiter können die Kanten, die an der Übergängen der Wände der Quernuten 22, 24 ausgebildet sind, gerundet ausgeführt sein, um damit das Strömungsverhalten des Schmiermittels zu verbessern.

Wie aus Fig. 3 ersichtlich ist, können in Umfangsrichtung des Radiallagers 6 mehrere Quernuten 22 und/oder Quernuten 24 nebeneinander liegend und zueinander beabstandet angeordnet sein. Dabei ist es auch möglich, dass sich die Anzahl der ersten Quernuten 22 von der Anzahl der zweiten Quernuten 24 in der Radiallagergleitfläche 7 unterscheidet.

Generell kann die Anzahl der ersten Quernuten 22 ausgewählt sein aus einem Bereich von 1 bis 4.

Die Anzahl der zweiten Quernuten 24 kann ebenfalls ausgewählt sein aus einem Bereich von 1 bis 4.

Es können entweder mehr erste Quernuten 22 oder mehr zweite Quernuten 24 in der Radiallagergleitfläche 7 ausgebildet sein, wobei in diesem Zusammenhang hinsichtlich der Anzahl der Quernuten 22 und/oder Quernuten 24 gegebenenfalls auch auf den Strömungsquerschnitt 27 bzw. 28 Rücksicht genommen werden kann. Es kann als bei einem größeren Strömungsquerschnitt 27 bzw. 28 die Anzahl der Quernuten 22 bzw. 24 reduziert werden, und umgekehrt.

Zudem besteht die Möglichkeit, dass sich die in Umfangsrichtung des Radiallagers 6 nebeneinander angeordneten Quernuten 22 und/oder 24 hinsichtlich der Breite und/oder der Tiefe und/oder der Querschnittsform voneinander unterscheiden. Beispielsweise kann die Breite und/oder die Tiefe in Richtung auf den höher belasteten Bereich des Radiallagers 6, der üblicherweise im nicht dargestellten unteren Bereich der Gleitlagerung liegt, größer werden. Ebenso kann sich die Querschnittsform in Umfangsrichtung des Radiallagers 6 betrachtet ändem, beispielsweise eine dreieckförmige Querschnittform im oberen Bereich und eine rechteckförmige Querschnittsform im unteren Bereich des Radiallagers 6 ausgebildet sein.

Die Angaben "oben" und "unten" beziehen sich dabei auf die Einbaulage des Radiallagers 6, sodass also "oben" den Bereich oberhalb der Achse 5 (Fig.1) und "unten" den Bereich unterhalb der Achse 5 bezeichnen.

Strichliert ist in Fig. 3 angedeutet, dass die erste Quernut 22 und/oder die zweite Quernut 24 nicht nur als Axialnuten ausgebildet sein können, sondern auch einen zur Axialrichtung unterschiedlichen Verlauf aufweisen können.

Beispielsweise können die erste Quernut 22 und/oder die zweite Quernut 24 schräg verlaufen und einen Winkel 29 mit der Axialrichtung 10 einschließen. Ebenso können die erste Quernut 22 und/oder die zweite Quernut 24 einen bogenförmigen Verlauf aufweisen. Es sind dabei auch Mischformen möglich, als eine Mischung aus ersten Quernuten 22 und/oder die zweiten Quernuten 24 in Axialrichtung und schräg zur Axialrichtung oder bogenförmig, wobei auch die Verlaufsrichtung von mehreren ersten Quernuten 22 und/oder mehreren zweiten Quernuten 24 in Umfangsrichtung des Radiallagers 6 unterschiedlich sein kann, also beispielsweise eine erste Quernut 22 und/oder eine zweite Quernut 24 in Axialrichtung im Bereich des Scheitels des Radiallagers 6 verläuft und eine weitere erste Quernut 22 und/oder zweite Quernut 24 in einem vom Scheitel des Radiallagers 6 verschiedenen Bereich schräg oder bogenförmig verläuft.

Weiter besteht die Möglichkeit dass mehrere erste Quernuten 22 und/oder zweite Quernuten 24 über eine weitere Nut in Umfangsrichtung des Radiallagers 6 oder schräg zur Umfangsrichtung des Radiallagers 6 miteinander strömungsverbunden sind.

Wie aus Fig. 3 ersichtlich kann die zumindest eine zweite Quernut 24 in Umfangsrichtung des Radiallagers 6 um einen vordefinierbaren Winkelwert versetzt zu der zumindest einen ersten Quernut 22 angeordnet sein. Der Winkelwert kann dabei ausgewählt sein aus einem Bereich von 2° bis 20°.

In Fig. 3 ist eine weitere Ausführungsvariante der Schmiermittelverteilung gezeigt. Dabei mündet die Zufuhrleitung 20 in eine Verteilnut 30, die sich beispielsweise mit ihrer Längserstreckung in Umfangsrichtung des Radiallagers 6 erstreckt. Die zumindest eine erste Quernut 22 und gegebenenfalls die zumindest eine zweite Quernut 24 erstrecken sich in der Folge von dieser Verteilnut 30 bis in die Stirnflächen 25 und gegebenenfalls 26 des Radiallagers 6. Diese Ausführungsvariante kann insbesondere vorgesehen werden, wenn mehrere erste Quernuten 22 und gegebenenfalls mehrere zweite Quernuten 24 angeordnet sind.

Wie aus Fig. 1 ersichtlich ist sind das erste Axiallager 8 unter Ausbildung eines ersten Schmiermittelspaltes 31 beabstandet zum Druckbund 18 und das zweite Axiallager 14 unter Ausbildung eines zweiten Schmiermittelspaltes 31 beabstandet zum Druckbund 19 angeordnet. Dabei kann der erste Schmiermittelspalt 31 einen kleineren Strömungsquerschnitt aufweist als der zweite Schmiermittelspalt 32, also der Abstand zwischen der Axiallagergleitfläche 7 des ersten Axiallagers 6 und dem Druckbund 18 kleiner sein als der Abstand zwischen einer Axiallagergleitfläche 33 des zweiten Axiallagers 14 und dem Druckbund 19.

Der Druckbund 18 kann beabstandet zum Gehäuse 17 oder dem Zahnrad 2 angeordnet sein, wodurch zwischen diesen eine Strömungskanal 34 ausgebildet wird, über den das Schmiermittel entsprechend Pfeil 35 aus dem Bereich des Gleitlagerpaketes 4 abgeführt werden kann. Das abgeführte Schmiermittel kann einer entsprechenden Sammelvorrichtung zugeführt werden, um es von dort erneut in den Schmiermittelkreislauf, gegebenenfalls nach einer Abkühlung, einzubringen.

Gleiches gilt für den Druckbund 19.

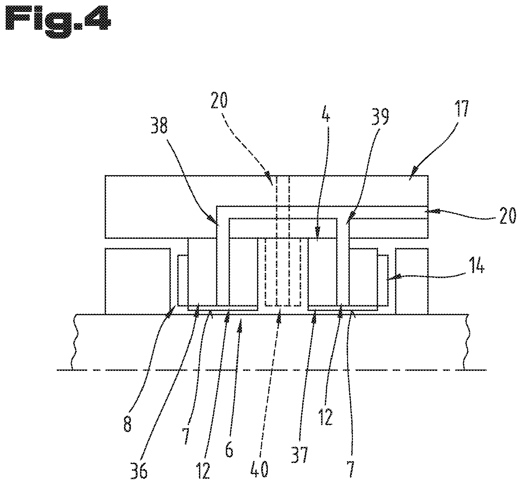

In Fig. 4 ist ein Ausschnitt aus einer weiteren Ausführungsvariante des Gleitlagerpaketes 4 gezeigt. Zum Unterschied zur Ausführungsvariante nach Fig. 1 ist hierbei das Radiallager 6 aufgeteilt auf zumindest zwei in Axialrichtung 10 nebeneinander angeordnete Teilradialgleitlager 36, 37, wobei zwischen diesen ein Zwischenraum ausgebildet ist. Die beiden Teilradialgleitlager 36, 37 können entsprechend den voranstehenden Ausführungen als Einschicht- oder Mehrschichtgleitlager ausgebildet sein.

Das erste Axiallager 8 ist bei dieser Ausführungsvariante am in Fig. 4 linken Teilradialgleitlager 36 und das zweite Axiallager 14 dementsprechend am in Fig. 4 rechten Teilradialgleitlager 37 angeordnet. Nachdem pro Teilradialgleitlager 36, 37 nur jeweils ein Axiallager 8 bzw. 14 angeordnet ist, weist das Teilradialgleitlager 36 dementsprechend bevorzugt nur die Quernuten 22 (z.B. Fig. 2) und das Teilradialgleitlager 37 nur die Quernuten 24 (z.B. Fig. 2) auf, um über diese die Axiallager 8 bzw. 14 mit dem Schmiermittel zu versorgen.

Die Schmiermittelversorgung der beiden Radiallagergleitflächen 7 erfolgt wieder über die Zufuhrleitung 20, die in diesem Fall vorzugsweise als Axialbohrung, z.B. im Gehäuse 17, ausgeführt ist, von der Radialbohrungen 38, 39 abzweigen, die zu den Radiallagergleitflächen 7 führen.

Alternativ dazu kann - wie dies in Fig. 4 strichliert dargestellt ist - die Zufuhrleitung 20 für das Schmiermittel auch zwischen den beiden Teilradialgleitlagern 36, 37 angeordnet sein. In diesem Fall kann zwischen den beiden Teilradialgleitlagern 36, 37 ein Zufuhrsteg 40 am Gehäuse angeordnet sein, der sich bis in den Bereich der Teilradialgleitlager 36, 37 erstreckt. Die Quernuten 22 bzw. 24 erstecken sich dabei über die gesamte Axialausdehnung der Gleitschichten 12 der Teilradialgleitlager 36, 37.

Das Radiallager 6 bzw. die Teilradialgleitlager 36, 37 können prinzipiell in Form von Gleitlagerhalbschalen ausgeführt sein. Bevorzugt sind diese jedoch als Lagerbuchsen ausgebildet.

Ein Mehrschichtgleitlager im Sinne dieser Beschreibung besteht zumindest aus der Stützschicht 13 und einer Gleitschicht 12, die auf der Stützschicht 13 aufgebracht ist. Die Gleitschicht 12 bildet dabei die Lauffläche für die Achse 5.

Neben dieser zweischichtigen Ausführung des Mehrschichtgleitlagers besteht im Rahmen der Erfindung auch die Möglichkeit, dass Zwischenschichten zwischen der Gleitschicht 12 und der Stützschicht 13 angeordnet sind, beispielsweise eine Lagermetallschicht und/oder zumindest eine Bindeschicht und/oder eine Diffusionssperrschicht.

Beispiele für Werkstoffe für die einzelnen Schichten des Mehrschichtgleitlagers sind in der AT 509 624 B1 beschrieben, auf die diesbezüglich Bezug genommen wird und die in diesem Umfang zur Beschreibung vorliegender Erfindung gehört.

Der Ordnung halber sei abschließend darauf hingewiesen, dass zum besseren Verständnis des Aufbaus Windkraftanlagengetriebes 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Windkraftanlagengetriebe | 36 | Teilradialgleitlager |
| 2 | Zahnrad | 37 | Teilradialgleitlager |
| 3 | Außenstirnverzahnung | 38 | Radialbohrung |
| 4 | Gleitlagerpaket | 39 | Radialbohrung |
| 5 | Achse | 40 | Zufuhrsteg |
| | | | |
| 6 | Radiallager | | |
| 7 | Radiallagergleitfläche | | |
| 8 | Axiallager | | |
| 9 | Axiallagergleitfläche | | |
| 10 | Axialrichtung | | |
| | | | |
| 11 | Trägerelement | | |
| 12 | Gleitschicht | | |
| 13 | Stützschicht | | |
| 14 | Axiallager | | |
| 15 | Stirnfläche | | |
| | | | |
| 16 | Stirnfläche | | |
| 17 | Gehäuse | | |
| 18 | Druckbund | | |
| 19 | Druckbund | | |
| 20 | Zufuhrleitung | | |
| | | | |
| 21 | Pfeil | | |
| 22 | Quernut | | |
| 23 | Pfeil | | |
| 24 | Quernut | | |
| 25 | Stirnfläche | | |
| | | | |
| 26 | Stirnfläche | | |
| 27 | Strömungsquerschnitt | | |
| 28 | Strömungsquerschnitt | | |
| 29 | Winkel | | |
| 30 | Verteilnut | | |
| | | | |
| 31 | Schmiermittelspalt | | |
| 32 | Schmiermittelspalt | | |
| 33 | Axiallagergleitfläche | | |
| 34 | Strömungskanal | | |
| 35 | Pfeil | | |

## Patentansprüche

1. Gleitlagerpaket (4) umfassend eine Gleitlager-Kombination aus einem Radiallager (6) mit einer Radiallagergleitfläche (7) und einem ersten Axiallager (8) mit einer Axiallagergleitfläche (9) und einem zweiten Axialgleiter (14), wobei das erste Axiallager (8) und das zweite Axialgleitlager (14) in einer Axialrichtung (10) neben dem Radiallager (6) so angeordnet sind, dass sie durch das Radialgleitlager (6) getrennt sind, sowie mit einer Schmiermittelversorgungseinrichtung, die eine Zufuhrleitung (20) für ein Schmiermittel zur Radiallagergleitfläche (7) des Radiallagers (6) umfasst, wobei in dem Radiallager (6) zumindest eine erste Quernut (22) und zumindest eine zweite Quernut (24) ausgebildet sind, sodass zumindest ein Teil des Schmiermittels in Richtung auf das erste Axiallager (8) und das zweite Axiallager (14) umgelenkt wird und das erste Axiallager (8) und das zweite Axialgleitlager (14) ausschließlich über das Radiallager (6) mit dem Schmiermittel versorgbar sind, **dadurch gekennzeichnet, dass** die zumindest einer erste Quernut (22) asymmetrisch zur zumindest einen zweiten Quernut (24) ausgebildet ist.

2. Gleitlagerpaket (4) nach Anspruch 1, **dadurch gekennzeichnet, dass** die zumindest eine erste Quernut (22) einen kleineren Strömungsquerschnitt (27) aufweist als die zumindest eine zweite Quernut (24).

3. Gleitlagerpaket (4) nach Anspruch 1 oder 2, **dadurch gekennzeichnet, dass** die zumindest eine erste Quernut (22) in Umfangsrichtung des Radiallagers (6) um einen vordefinierbaren Winkelwert versetzt zur zumindest einen zweiten Quernut (24) ausgebildet ist.

4. Gleitlagerpaket (4) nach einem der Ansprüche 1 bis 3, **dadurch gekennzeichnet, dass** das erste Axiallager (8) einen ersten Schmiermittelspalt (31) und das zweite Axiallager (14) einen zweiten Schmiermittelspalt (32) ausbilden, wobei der erste Schmiermittelspalt (31) einen kleineren Strömungsquerschnitt aufweist als der zweite Schmiermittelspalt (32).

5. Gleitlagerpaket (4) nach einem der Ansprüche 1 bis 4, **dadurch gekennzeichnet, dass** das erste und das zweite Axialgleitlager (8, 14) unmittelbar benachbart zum Radiallager (6) angeordnet sind.

6. Gleitlagerpaket (4) nach einem der Ansprüche 1 bis 5, **dadurch gekennzeichnet, dass** das Radiallager (6) aufgeteilt ist auf zwei in Axialrichtung (10) nebeneinander angeordnete Teilradialgleitlager (36, 37).

7. Windkraftanlagengetriebe (1) mit zumindest einem Zahnrad (2), das auf einer Achse (5) über ein Gleitlagerpaket (4) gelagert ist, **dadurch gekennzeichnet, dass** das Gleitlagerpaket (4) nach einem der vorhergehenden Ansprüche ausgebildet ist.

## Claims

1. Slide bearing set (4) comprising a slide bearing combination consisting of a radial bearing (6) with a radial bearing sliding surface (7) and a first axial bearing (8) with an axial bearing sliding surface (9) and a second axial bearing (14), wherein the first axial bearing (8) and the second axial bearing (14) are arranged in an axial direction (10) beside the radial bearing (6) in such manner that they are separated by the radial bearing (6), and having a lubricant supply device which comprises a supply line (20) for a lubricant to the radial bearing slide surface (7) of the radial bearing (6), wherein at least one first transversal groove (22) and at least one second transversal groove (24) are designed in such manner that at least a portion of the lubricant is diverted towards the first axial bearing (8) and the second axial bearing (14), and the first axial bearing (8) and the second axial bearing (14) can only be supplied with the lubricant via the radial bearing (6), **characterised in that** the at least one first transversal groove (22) is disposed asymmetrically with respect to the at least one second transversal groove (24).

2. Slide bearing set (4) according to claim 1, **characterised in that** the at least one first transversal groove (22) has a smaller flow cross section (27) than the at least one second transversal groove (24).

3. Slide bearing set (4) according to claim 1 or 2, **characterised in that** the at least one first transversal groove (22) is constructed in the circumferential direction of the radial bearing (6) and offset by a predefinable angle with respect to at least one second transversal groove (24).

4. Slide bearing set (4) according to any of claims 1 to 3, **characterised in that** the first axial bearing (8) forms a first lubricant gap (31) and the second axial bearing (14) forms a second lubricant gap (32), wherein the first lubricant gap (31) has smaller flow cross section than the second lubricant gap (32).

5. Slide bearing set (4) according to any of claims 1 to 4, **characterised in that** the first and the second axial slide bearings (8, 14) are arranged directly beside the radial bearing (6).

6. Slide bearing set (4) according to any of claims 1 to 5, **characterised in that** the radial bearing (6) is divided into two partial radial slide bearings (36, 37) arranged beside one another in the axial direction (10).

7. Wind turbine gear mechanism (1) having at least one gearwheel (2), which is mounted on an axle (5) via a slide bearing set (4), **characterised in that** the slide bearing set (4) is designed according to any one of the preceding claims.

## Revendications

1. Ensemble de paliers lisses (4) comportant une combinaison de paliers lisses comprenant un palier radial (6) ayant une surface de glissement de palier radial (7) et un premier palier axial (8) ayant une surface de glissement (9), et un second palier axial (14), dans lequel le premier palier axial (8) et le second palier axial (14) sont disposés dans une direction axiale (10) à côté du palier radial (6) de telle sorte qu'ils sont séparés par le palier radial (6), ainsi qu'un dispositif d'alimentation en lubrifiant qui présente une conduite d'alimentation (20) d'un lubrifiant vers la surface de glissement (7) du palier radial (6), dans lequel dans le palier radial (6) sont formées au moins une première rainure transversale (22) et au moins une seconde rainure transversale (24), de sorte qu'au moins une partie du lubrifiant est déviée en direction du premier palier axial (8) et du second palier axial (14), et que le premier palier axial (8) et le second palier axial (14) peuvent être alimentés en lubrifiant uniquement par le palier radial (6), **caractérisé en ce que** la au moins une première rainure transversale (22) est réalisée asymétrique par rapport à au moins une seconde rainure transversale (24).

2. Ensemble de paliers lisses (4) selon la revendication 1, **caractérisé en ce que** la au moins une première rainure transversale (22) présente une section transversale d'écoulement (27) plus petite que la au moins une seconde rainure transversale (24).

3. Ensemble de paliers lisses (4) selon la revendication 1 ou 2, **caractérisé en ce que** la au moins une première rainure transversale (22), dans la direction circonférentielle du palier radial (6), est réalisée décalée d'une valeur angulaire prédéterminée par rapport à au moins une seconde rainure transversale (24).

4. Ensemble de paliers lisses (4) selon l'une quelconque des revendications 1 à 3, **caractérisé en ce que** le premier palier axial (8) forme un premier intervalle de lubrifiant (31) et le deuxième palier axial (14) forme un second intervalle de lubrifiant (32), dans lequel le premier intervalle de lubrifiant (31) présente une section transversale d'écoulement plus petite que le deuxième intervalle de lubrifiant (32).

5. Ensemble de paliers lisses (4) selon l'une quelconque des revendications 1 à 4, **caractérisé en ce que** les premier et second paliers lisses axiaux (8, 14) sont agencés immédiatement adjacents au palier radial (6).

6. Ensemble de paliers lisses (4) selon l'une quelconque des revendications 1 à 5, **caractérisé en ce que** le palier radial (6) est divisée en deux paliers radiaux partiels (36, 37) agencés côté à côté dans la direction axiale (10).

7. Entraînement de turbine éolienne (1) avec au moins une roue dentée (2), qui est montée sur un axe (5) par l'intermédiaire d'un ensemble de paliers lisses (4), **caractérisé en ce que** l'ensemble de paliers lisses (4) est réalisé selon l'une quelconque des revendications précédentes.
